# EUROPÄISCHE PATENTANMELDUNG

(11) **EP 1 618 982 A1**
(43) Veröffentlichungstag der Anmeldung: **25.01.2006**
(21) Anmeldenummer: 05105288.4
(22) Anmeldetag: 16.06.2005
(51) Int. Cl.: B23K 9/20

(54) **Zündschaltung für ein Bolzenschweissgerät**

(30) Priorität: 17.07.2004 DE 102004034752
(71) Anmelder: Flemke, Michael, 84144 Geisenhausen (DE)
(72) Erfinder: Flemke, Michael, 84144 Geisenhausen (DE)
(74) Vertreter: Gustorf, Gerhard

(57) **Zusammenfassung**

Die Zündschaltung für ein Bolzenschweißgerät, bei dem zur Spitzenzündung die Schweißenergie einer Kondensatorbatterie entnommen wird, deren Kondensatoren durch Zündung von Thyristoren entladen werden, ist dadurch gekennzeichnet, daß der Abgriff der Zündspannung direkt von der Kondensatorspannung erfolgt.

## Beschreibung

Die Erfindung betrifft eine Zündschaltung für ein Bolzenschweißgerät, bei dem zur Spitzenzündung die Schweißenergie einer Kondensatorbatterie entnommen wird, deren Kondensatoren durch Zündung von Thyristoren entladen werden.

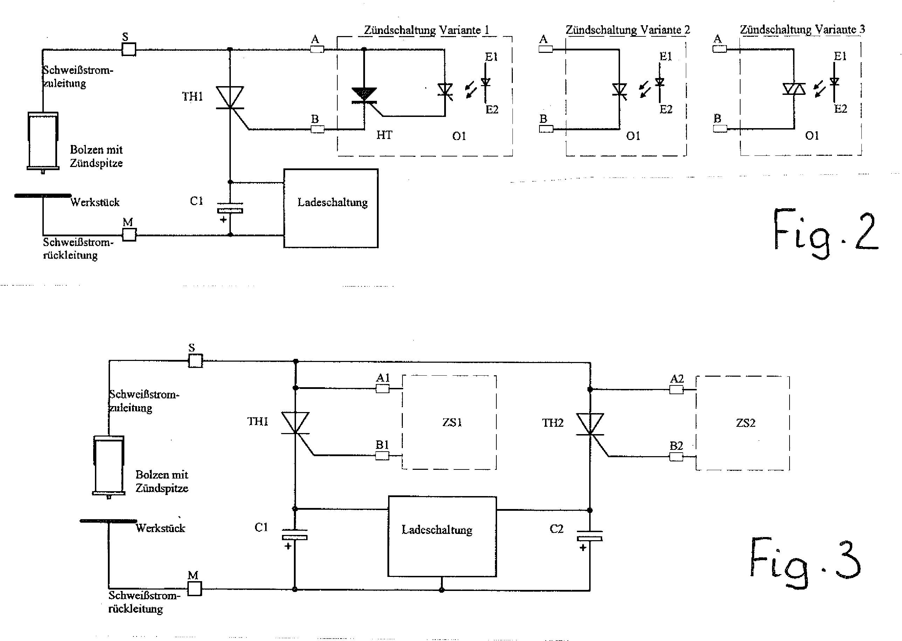

Die Figuren 2 und 3 zeigen zwei herkömmliche Schaltungen für Bolzenschweißgeräte, wobei aus Vereinfachungsgründen Hilfswiderstände und Hilfskondensatoren nicht eingezeichnet sind. In diesen beiden Figuren sind die einzelnen Bauelemente wie folgt gekennzeichnet:
- TH1, TH2: Schweißstromthyristor
- C1, C2: Kondensatoren (Schweißenergiequelle)
- HT: Hilfs-Thyristor
- O1: Thyristor- oder Triac-Optokoppler
- S: Geräteanschluss für Schweißstromausgang
- M: Geräteanschluss für Schweißstrom-Masse
- A, B, A1,: Schaltungspunkte zum Anschluss der Zündschaltung
- B1, A2, B2: an den Schweißstromthyristor
- E1, E2: Steuereingänge für Zündschaltung

In Figur 2 sind für die Zünd- oder Triggerschaltung drei mögliche Varianten nebeneinander angedeutet.

Figur 3 zeigt eine alternative Standardschaltung, die im Einsatz ist, um über eine Kapazitätsumschaltung mehrere Bolzengrößen schweißen zu können. Die dabei verwendeten Zündschaltungen ZS entsprechen dabei den in Figur 2 angegebenen Varianten.

Die Kapazitätsumschaltung findet Verwendung, wenn eine variable Ladekapazität benötigt wird, abhängig von der jeweiligen Bolzengröße.

Die Nachteile der in Figur 3 gezeigten Schaltung können wie folgt angegeben werden:

Wenn mit beiden Kondensatoren gleichzeitig geschweißt wird, verlängert sich die Schweiß- und Entladezeit. Dies kann dazu führen, daß bestimmte Werkstoffe, z. B. Aluminium, nicht mehr prozeßsicher verschweißt werden. Ursache dieses Entladeverhaltens ist die Abnahme der Zündspannung für die Thyristoren vom gemeinsamen Schweißspannungsanschluß. Aufgrund der physikalischen Parameterstreuung der Bauteile (Thyristoren TH1 und TH2) und der Zünd- oder Triggerschaltung wird immer ein Thyristor zuerst zünden. Damit fehlt dem zweiten Thyristor die nötige Spannungsdifferenz, um ebenfalls zu zünden. Erst dann, wenn der zuerst gezündete Thyristor den Kondensator C auf eine gewisse Spannung entladen hat, steht für den zweiten Thyristor TH2 die Zündspannung zur Verfügung. Sobald diese zündet, übernimmt er aufgrund der noch höheren Kondensatorspannung den gesamten Stromfluß, so daß der Thyristor TH1 sperrt. Auf diese Weise schaukelt sich der Vorgang ungesteuert wechselseitig nach unten. Dadurch entsteht eine intermitierende, wechselseitige Entladung der Kondensatoren, wodurch es zur Verlängerung der Schweißzeit kommt.

Für bestimmte Anwendungsfälle kann es sinnvoll sein, die Entladezeit und damit auch die Schweißzeit erheblich zu verlängern, etwa um den Faktor 2 bis 5. Dies wird derzeit bei allen bekannten Geräten dieser Bauart entweder durch Verlängerung der Schweißstromkabel oder durch Querschnittsreduzierung der Kabel erreicht. Die Verluste im Kabel reduzieren die verfügbare Schweißenergie, so daß durch Erhöhung der Ladespannung ein Ausgleich geschaffen werden muß.

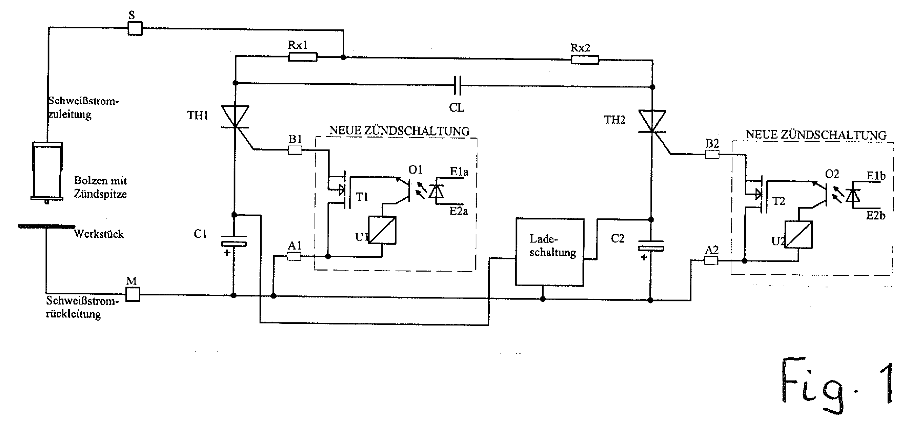

Die in Figur 1 dargestellte Zünd- oder Triggerschaltung gemäß der Erfindung beseitigt einerseits die Nachteile der bekannten Schaltungstechnik und ermöglicht andererseits zusätzlich eine gesteuerte, wechselseitige Entladung der Kondensatoren, um damit die Schweißzeitlänge gezielt zu beeinflussen.

Weiterhin kann mit der Schaltung gemäß der Erfindung ein Doppelimpuls-Schweißen durchgeführt werden. Hierbei besteht das Ziel darin, mit dem ersten Schweißimpuls beispielsweise eine Oberflächenbeschichtung, beispielsweise Zink, Bonderschicht oder Korrosionsschutz, wegzubrennen oder aufzuschmelzen, um dann gezielt die eigentliche Schweißenergie in die Schweißstelle zu bringen.

In der erfindungsgemäßen Zündschaltung gemäß Figur 1 sind die einzelnen Vorteile wie folgt bezeichnet:
- TH1, TH2: Schweißstromthyristor
- C1, C2: Kondensatoren (Schweißenergiequelle)
- T1, T2: MOS-FET oder Bipolartransistor oder IGBT oder funktionsähnliches Schaltelement
- U1, U2: Spannungsminderer für Steuerspannung an T1 und T2
- O1, O2: Optokoppler
- Rx1, Rx2: Widerstand, alternativ als Induktivität Lx1, Lx2
- CL: Löschkondensator, optional
- S: Geräteanschluss für Schweißstromausgang
- M: Geräteanschluss für Schweißstrom-Masse
- A1, B1: Schaltungspunkte zum Anschluss der Zündschaltung
- A2, B2: an den Schweißstromthyristor
- E1a, E2a: Steuereingänge für Zündschaltung
- E1b, E2b:

Die Vorteile der Erfindung können wie folgt angegeben werden:
1. Die Zündspannung der Thyristoren TH1 und TH2 wird nicht vom Schweißstromausgang abgegriffen, sondern vom Pluspol der Kondensatoren bzw. - bei umgekehrt polarisiertem Thyristor und Ladekondensator - von dessen Minuspol. Damit steht die Zündspannung dauerhaft zur Verfügung und es kommt nicht zu einem Löschen (Sperren) des langsameren Thyristors.
2. Durch entsprechende Ansteuerung der Signale an den Steuereingängen E für die Zündschaltung und damit der Transistoren T1 und T2 kann der Entladevorgang aufgrund des wechselseitigen Ansteuerns gezielt beeinflußt werden.

Durch die Widerstände Rx1 und Rx2 sowie den optionalen Löschkondensator CL wird ein exaktes Sperren des komplementären, geradeleitenden Thyristors erreicht, wenn der andere Thyristor gerade gezündet wird.

Die nachstehende Aufstellung ergibt die Besonderheiten der erfindungsgemäßen Zündschaltung nochmals stichpunktartig wieder:
1. Abgriff der Zündspannung direkt von der Kondensatorspannung
2. Verwendung selbstabschaltbarer Triggerelemente (z. B. Transistor, IGBT, MOS-FET) anstelle von Thyristorkopplern oder Triackopplern
3. Durch Verwendung von zwei zusätzlichen Widerständen und des Löschkondensators CL wird ein gezieltes Zünden und Löschen der Schweißstrom-Thyristoren erreicht
4. Integration der Widerstände R in den mechanischen Aufbau der Thyristorbefestigung und/oder Schweißstrom-Leitung.
5. Die Widerstände Rx können durch Induktivitäten Lx ersetzt werden, um dadurch eine weitere Verlängerung der Schweißzeit zu erreichen. In diesem Fall wird der Löschkondensator CL benötigt.
6. Konstruktive Integration der Induktivität Lx in den mechanischen Aufbau.

## Patentansprüche

1. Zündschaltung für ein Bolzenschweißgerät, bei dem zur Spitzenzündung die Schweißenergie einer Kondensatorbatterie entnommen wird, deren Kondensatoren durch Zündung von Thyristoren entladen werden, **dadurch gekennzeichnet, daß** der Abgriff der Zündspannung direkt von der Kondensatorspannung erfolgt.

2. Zündschaltung nach Anspruch 1, **dadurch gekennzeichnet, daß** die Zündspannung der Thyristoren vom Pluspol der Kondensatoren abgegriffen wird.

3. Zündschaltung nach Anspruch 1, **dadurch gekennzeichnet, daß** die Zündspannung bei umgekehrt polarisiertem Thyristor und Ladekondensator von dessen Minuspol abgegriffen wird.

4. Zündschaltung nach einem der vorhergehenden Ansprüche, **gekennzeichnet durch** die Verwendung von in Reihe geschalteten Widerständen zwischen dem Anschluß für den Schweißstromausgang und einem parallel geschalteten Löschkondensator.

5. Zündschaltung nach einem der vorhergehenden Ansprüche, **dadurch gekennzeichnet, daß** durch die Verwendung selbstabschaltbarer Triggerelemente (T1, T2), die mit jeweils einem Optokoppler verbunden sind.
